Europäisches Patentamt

European Patent Office

Office européen des brevets

(11) Publication number: 0 425 123 A2

# EUROPEAN PATENT APPLICATION

(21) Application number: 90311090.6

(22) Date of filing: 10.10.90

(51) Int. Cl.⁵: G06F 15/68

(30) Priority: 11.10.89 GB 8922851

(43) Date of publication of application:
02.05.91 Bulletin 91/18

(84) Designated Contracting States:
DE FR IT NL SE

(71) Applicant: GEC-MARCONI LIMITED
The Grove, Warren Lane
Stanmore, Middlesex HA7 4LY(GB)

(72) Inventor: Coombs, Timothy Arthur
31 Central Drive
St. Albans, Hertfordshire, AL4 0UX(GB)

(74) Representative: Waters, Jeffrey et al
GEC Patent Department (Chelmsford Office)
GEC-Marconi Research Centre, West
Hanningfield Road
Great Baddow, Chelmsford, Essex CM2
8HN(GB)

(54) Image enhancer.

(57) A problem with many types of image intensifiers are spurious signals and unwanted data. To overcome this problem this invention provides a method and apparatus of assigning a grey value within a predetermined range to each pixel and dividing the image into regions dependent upon the density of occurrence of selected grey values thereby reducing random signals and those areas too small to be of interest.

FIG. 1.1

FIG.1.2

FIG.1.3

FIG.1.4

FIG.1.5

FIG.1.6

FIG.1.7

FIG.1.8

FIG.1.9

FIG.1.10

FIG.1.11

## IMAGE ENHANCER

This invention relates to a method, and apparatus for employing a method, of enhancing an image, and in particular relates to the enhancement of a pixelated image.

Most electronic imaging system produce a pixelated image as the final output, this either being obtained from a scanning (Vidicon) type system, or from a device that has a pixelated sensor, for example a charge coupled device (CCD). Such imaging apparatus is often used in adverse conditions for example in smoke or haze, in poor light, or in darkness using infra red radiation to produce the image. In all these conditions the quality of the image obtained may not be satisfactory for the purposes for which it is required, and it is therefore necessary to "clean up" the image to a reasonable standard.

In addition to the above in certain applications electronic imagers are employed to view a cluttered scene for example heavy undergrowth or a land mass viewed for example from an aircraft, from the image of which the operator wishes to extract as much detail as possible.

In order to obtain more information from the resultant image various methods and apparatus are employed to enhance the image, most emphasizing intensity variations in the image. The problems with such devices is that no account is taken of spurious information within the image, information which often corrupts the final image.

According to a first aspect this invention provides a method of enhancing a pixelated image comprising: determining the grey value within a preset range of each pixel; selecting certain grey values from the range dependent upon the number of occurrences of each pixel grey value within an image; defining mutually exclusive subranges between the grey values selected; assigning a single and different grey value to to pixels in each subrange; and re-assigning a pixel the grey value assigned to an adjacent subrange in dependence upon the grey values assigned to adjacent pixels.

According to a second aspect this invention provides apparatus for enhancing a pixelated image comprising: means for determining the grey value within a preset range of each pixel; means for selecting certain grey values from the range dependent upon the number of occurrences of each pixel grey value within an image; means for defining mutually exclusive subranges between the grey values selected; means for assigning a single and different grey value to pixels in each subrange; and means for reassigning a pixel the grey value assigned to an adjacent subrange in dependence upon the grey value assigned to adjacent pixels.

By employing the invention any spurious pixel which does not have adjacent pixels within the same range of grey values between minima points will be assigned a grey value in the next region thus eliminating unwanted noise on the image, and also forming areas of like intensity into uniform areas which are more easily identified by the human eye.

Preferably the selected grey values are selected in accordance with minima of a plot of a number of occurrences against grey value, therefore the grey value assigned to a subrange represents grey value within that range having a great number of occurrences. This thereby assigns to all pixels corresponding to a large region of similar original grey values a uniform grey value making it easier to distinguish that region from surrounding regions which will be assigned a contrasting grey value.

In addition to reconfiguring the image into uniform regions, if a given pixel is reassigned a grey value depending on the values of all its adjacent pixels being in that same range, then the resultant regions of the image will be outlined by regions of pixels, one pixel thick which are never confirmed, as will be described in more detail latter with reference to the drawings. These pixels may be assigned a contrasting grey value further aiding interpretation, either by the human eye, or by further processing techniques. However this may lead to some thin images becoming disjointed and so alternatively a pixel can be reassigned a grey value dependent on the values of five adjacent pixels.

The invention will now be described by way of example only with reference to the accompanying drawings of which:

Figure 1 shows a schematic example of image enhancement in accordance with the invention;

Figure 2 illustrates various types of shape that may be identified using the invention; and

Figure 3 gives us a possible scene to which the imager may be applied.

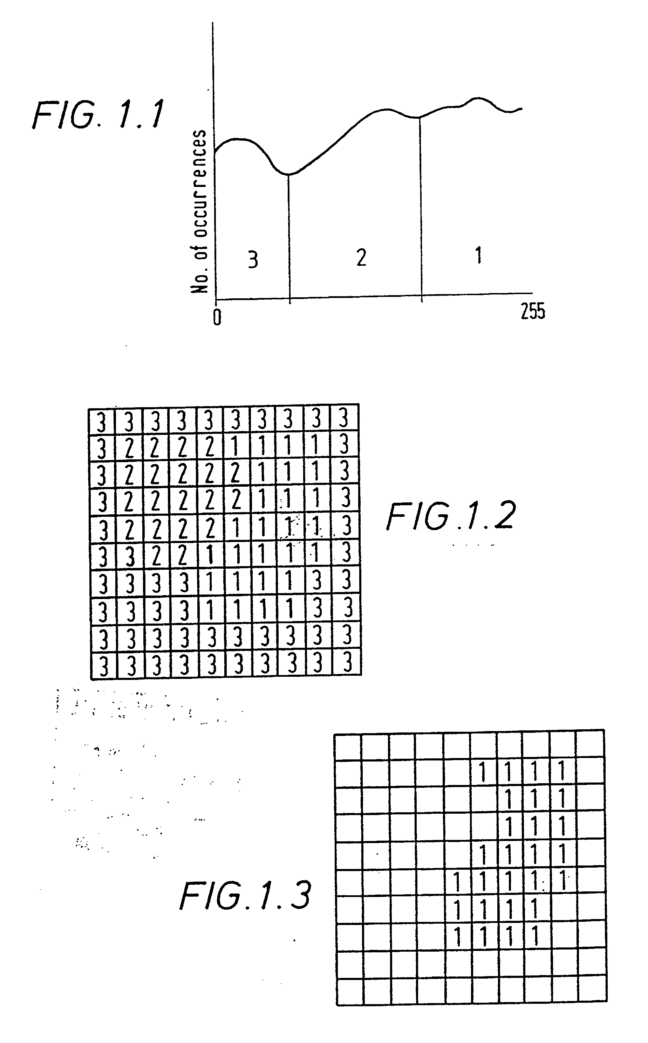

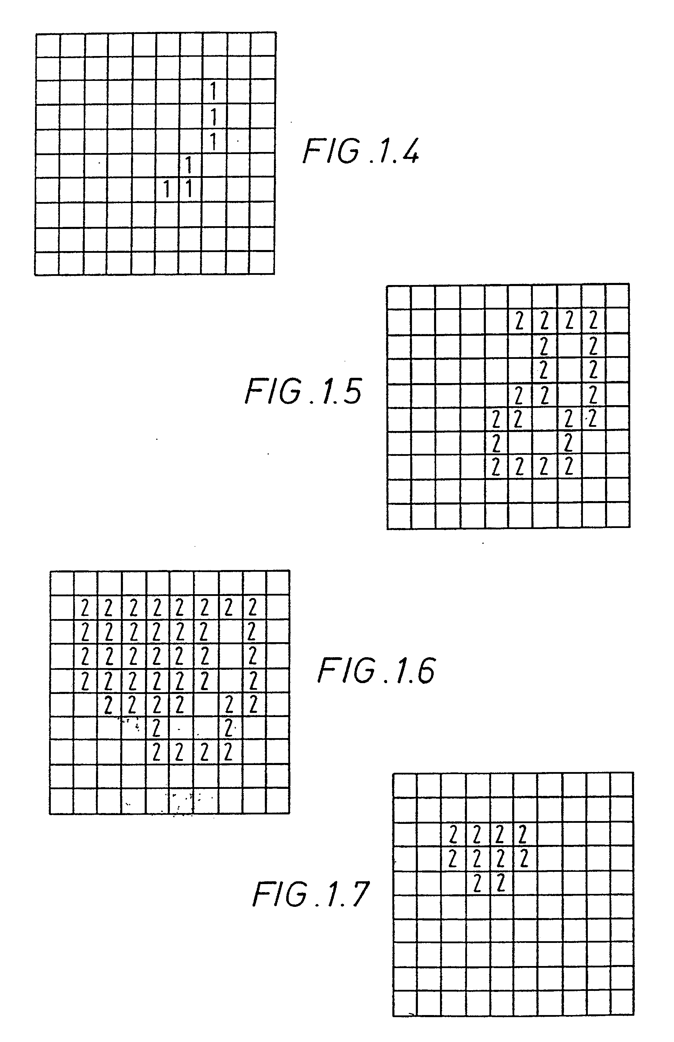

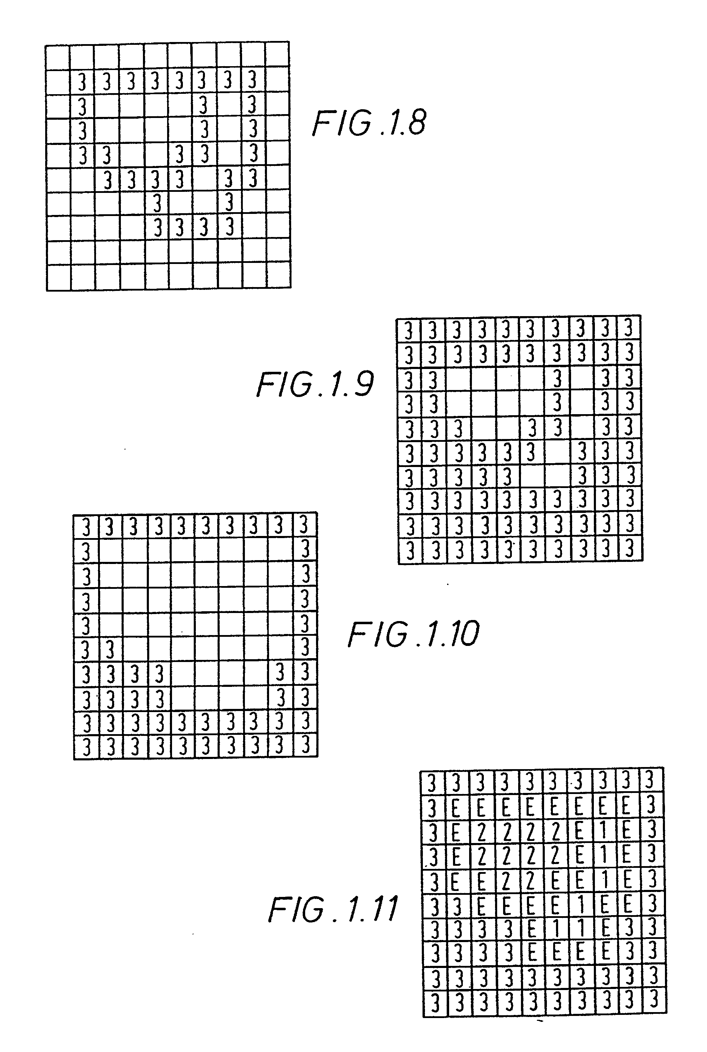

The first step of the technique is to obtain an image of a scene in pixelated form (not shown) and assign to each pixel a grey level between 0 and 255 representative of its intensity. From this a plot of number of occurrences against grey level is obtained, as illustrated in Figure 1.1, and minima recorded. These minima are used to define three subranges 1, 2 and 3 as shown.

Returning to the original pixelated image, each pixel is assigned a value 1, 2 or 3, Figure 1.2, corresponding to the subrange in which its grey value falls, all edge pixels being assigned a value corresponding to the lowest subrange.

The new image is scanned and pixels within the highest range located as illustrated in Figure 1.3. Those having adjacent pixels all in the same subrange as themselves are confirmed, Figure 1.4, whilst all those not having all adjacent pixels within the same range are assigned a grey value in the next adjacent range as shown in Figure 1.5. The process is then repeated on the next range and in Figure 1.6 all the pixels in subrange 2 have been identified and those surrounded by like pixels are as indicated in Figure 1.7, those not so surrounded are assigned a value in the next subrange (Figure 1.8). The process is again repeated for the third subrange as illustrated in Figures 1.9 and 1.10, this eventually leaving the pixels shown in Figure 1.11 which will never be confirmed by the process. These are preferably set at a contrasting intensity level (E) to the surrounding regions so as to form the outline of the object which is being viewed. The object being viewed is now represented by the 1, 2 and 3 levels shown in Figure 1.11.

For reasons of clarity the invention has been shown employed on a minor scale, but it will be realised in practical applications the pixel array will be many hundreds of pixels square.

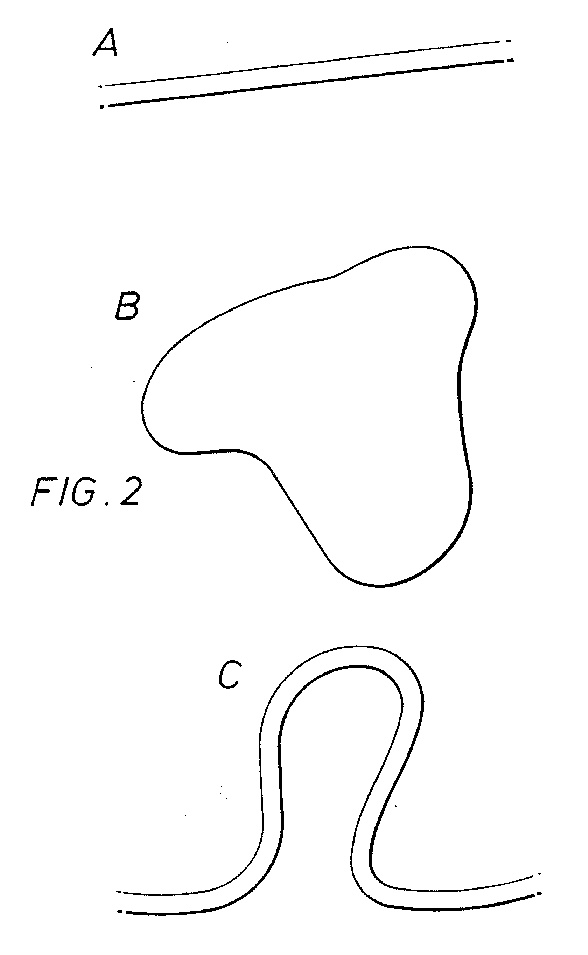

Having employed the method of Figure 1 to give a sharp clearly defined image made up of homogeneous regions having clearly defined boundaries, the image can then be applied to identify shapes within the image several types of which are displayed schematically in Figure 2.

By obtaining the parameters for example, area perimeter and length of each region in a segmentated display, the type of region being viewed can be classified into one of the groups shown in Figure 2. A long thin region A is characterised by having a high ratio of the length of its perimeter (in terms of pixels) to its area. A more regular shape B will have a large area to perimeter ratio, although this will vary depending on how many pixels the image takes up altogether, but this can be taken account of by the processing. Other shapes for example C can also be identified. C having a large perimeter to area ratio but will fit in a smaller 'box' than the straight object A, or alternatively it may be identified by determining how many times the region crosses a particular line on the image, preferably corresponding to a line of a raster scan.

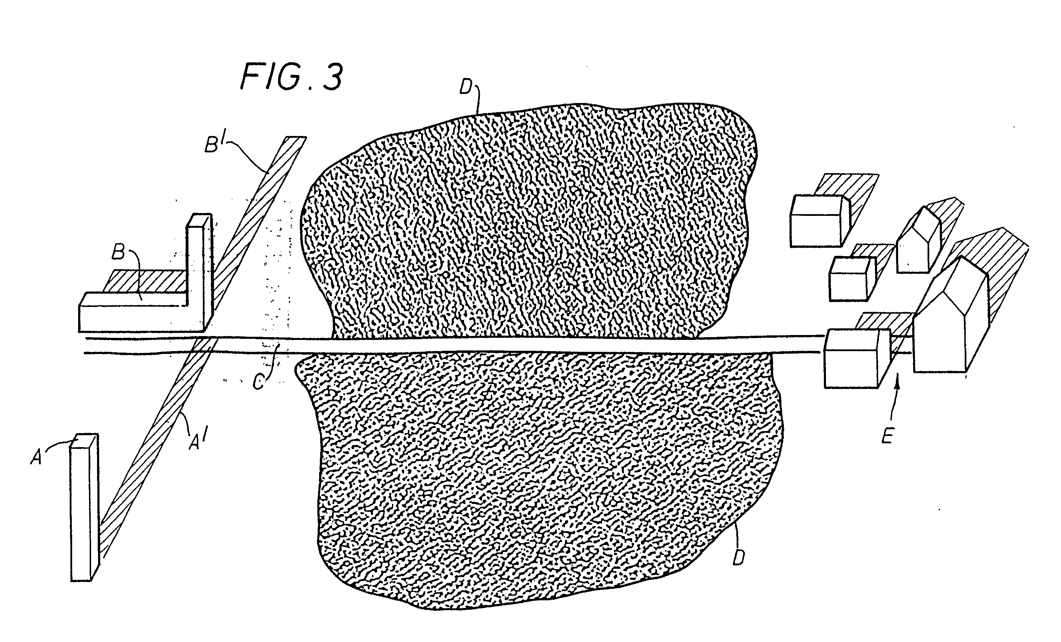

Figure 3 shows a typical scene that may be viewed with an imager and comprises a large buildings A, a church B, a road C running through fields D to a town E. It will be appreciated that in an image of the scene, the intensities of the respective areas A - E will be contrasting.

By employing the present invention, the scene will be imaged and divided into clearly defined regions, buildings A and B, their respective shadows A1, B1, the road C, fields D and various minor areas in the town E. The object of the further process is to identify lines of communication such as roads C from the image. C will be identified by its parameters, (long and thin), as a road or other means of communication for example a railway line or canal. However shadows A1 and B1 will also form a straight line. This could cause confusion in interpretation of the image. This may be overcome by differentating the lines of communication from such lines as shadows in the following way. The technique relies on the fact that roads are generally bordered on each side by fields, which will have a uniform but contrasting intensity, as well as unique parameters. Shadows will be eliminated from the final image by suppressing those lines which are not bordered on at least one side by regions identified from their parameters as fields. The final image will therefore only show straight regions bordered by large uniform areas (i.e. fields), therefore ignoring confusing patterns that may arise in built up areas. This enables all the unwanted information to be removed from the image in order to leave just the lines of communication which it is desired to identify. Of course, it is not necessary in performing these further steps to use the present invention to produce a segmented image. Other methods of segmentation may be employed. The attention of the reader is drawn to our co-pending UK patent application number 8922853 which describes and claims the further steps referred to.

## Claims

1. A method of enhancing a pixelated image comprising: determining the grey value within a preset range of each pixel; selecting certain grey values from the range dependent upon the number of occurrences of each pixel grey value within an image; defining mutually exclusive subranges between the grey values selected; assigning a single and different grey value to pixels in each subrange; and re-assigning a pixel the grey value assigned to an adjacent subrange in dependence upon the grey values assigned to adjacent pixels.

2. A method as claimed in claim 1 wherein the certain grey values are selected in accordance with minima of a plot of number of occurrences of pixels against grey value.

3. A method as claimed in claims 1 or 2 wherein a given pixel is reassigned a grey value dependant on the values of all the pixels adjacent to it.

4. A method as claimed in claim 1 or 2 wherein the pixel is reassigned a grey value dependant on the values of five pixels adjacent to it.

5. A method as claimed in any preceding claim wherein for an end subrange each pixel assigned the grey value assigned to that subrange is either confirmed as having that assigned grey value or rejected and assigned the grey value assigned to the next adjacent subrange, dependent upon the grey values assigned to adjacent pixels, and whereby on completion of confirming or rejecting each pixel in that first subrange the process is repeated for pixels assigned grey values in each adjacent subrange until the subrange at the other end of the range is reached.

6. A method as claimed in claim 6 wherein all pixels not confirmed at the end of the process are assigned a contrasting grey value.

7. Apparatus for enhancing a pixelated image comprising: means for determining the grey value within a preset range of each pixel; means for selecting certain grey values from the range dependent upon the number of occurrences of each pixel grey value within an image; means for defining mutually exclusive subranges between the grey values selected; means for assigning a single and different grey value to pixels in each subrange; and means for reassigning a pixel the grey value assigned to an adjacent subrange in dependence upon the grey value assigned to adjacent pixels.

8. Apparatus as claimed in claim 7 wherein the means for selecting certain grey values selects those values in accordance with minima of a plot of number of occurrences of pixels against grey value.

9. Apparatus as claimed in claim 7 or 8 wherein a given pixel is reassigned a grey value dependent on the values of all the pixels adjacent to it.

10. Apparatus as claimed in claim 7 or 8 wherein the pixel is reassigned a grey value dependent on the values of five pixels adjacent to it.

11. Apparatus as claimed in any one of claims 7 to 10 wherein the means for reassigning a pixel a grey value assigned to an adjacent subrange in dependence upon the grey values assigned to adjacent pixels, either confirms or rejects pixels and assigns them to that adjacent subrange starting with an end subrange whereby on completion of every pixel assigned the value of that first subrange that means then repeats the process in turn for pixels assigned grey values in each adjacent subrange until the subrange at the other end of the range is reached.

12. Apparatus as claimed in claim 11 which assigns to pixels not assigned a grey value at the end of the process a contrasting grey value.

FIG. 1.1

No. of occurrences

3    2    1

0    255

FIG.1.2

FIG.1.3

FIG .1.4

FIG .1.5

FIG .1.6

FIG .1.7

*FIG.1.8*

*FIG.1.9*

*FIG.1.10*

*FIG.1.11*

A

B

FIG . 2

C

FIG. 3